# EUROPEAN PATENT SPECIFICATION

(11) **EP 3 218 207 B1**
(45) Date of publication and mention of the grant of the patent: **29.05.2019**
(21) Application number: 15858162.9
(22) Date of filing: 10.11.2015
(51) Int. Cl.: B60B 3/02, C23C 28/00, B05B 7/22, B05B 13/04

(54) **METHOD OF COATING ALLOY WHEELS**
VERFAHREN ZUR BESCHICHTUNG VON ALURÄDERN
PROCÉDÉ DE REVÊTEMENT DE ROUES D'ALLIAGE

(30) Priority: 10.11.2014 US 201462077447 P
(43) Date of publication of application: 20.09.2017
(73) Proprietor: Superior Industries International Inc., Van Nuys, California 91406 (US)
(72) Inventor: KAKAR, Parveen, Novi, Michigan 48374 (US); CHENAULT III, Henry Clay, Fayetteville, Arkansas 72704 (US)
(74) Representative: Hohgardt, Martin
(86) International application number: PCT/US2015/059954
(87) International publication number: WO 2016/077345

(56) References cited:
- WO-A1-2004/076716
- WO-A1-2014/118211
- DE-A1-102009 042 103
- US-A- 4 866 241
- US-A1- 2005 282 003
- US-A1- 2006 000 094
- US-A1- 2007 207 310
- US-A1- 2012 015 209
- US-A1- 2012 015 209
- MANNOUCH S.: 'Spray Gun Technique' October 1995, XP055440895 Retrieved from the Internet: <URL:http://english.finishingbrands.eu/Edit or/files/GUNTEQU01.pdf> [retrieved on 2016-01-04]
- 'How to Powder Coat' WIKIHOW 30 August 2013, XP055440934 Retrieved from the Internet: <URL:https://web.archive.org/web/2013083003 4400/ http://www.wikihow.com/Powder-Coat> [retrieved on 2016-02-24]

## Description

### PRIOR APPLICATIONS

The present application claims priority to United States Provisional Patent Application No. 62/077,447 filed November 10, 2014.

### TECHNICAL FIELD

The present application relates generally toward a method of coating a cast alloy wheel for providing improved durability. More specifically, the present application relates toward a method of treating a cast alloy wheel with plasma as part of a coating process for providing improved durability.

### BACKGROUND

Improving durability of exterior automotive components is an ongoing endeavor. In particular, chipping or other abrasion of an exterior coating of a metallic substrate is known to cause accelerated failure of the coating from oxidation, which is manifested as white rust on aluminum alloy components. This is particularly true for aluminum wheels, which require a significant amount of processing to provide an aesthetically pleasing surface that is also resistant to chipping and rust. To date, none of the treatments performed on cast alloy wheels has been able to provide the enhanced durability requested by the OEM customer.

The three-dimensional configuration of a typical cast alloy wheel adds to the complexity of the coating process. The present process includes a number of steps beginning with forming the alloy wheel though a cast process to achieve the three-dimensional configuration. Subsequent to forming, the alloy wheel is machined to provide a smooth surface having a desired configuration. After machining, the entire wheel is subject to a pretreatment including liquid cleaning and the addition of a conversion coating to provide corrosion resistance and improved paint adhesion. The conversion coating is known to include an acidic wash to prepare the surface of the alloy to receive a paint coating. Subsequent to treatment with the conversion coating, the wheel is painted with a powder primer and liquid color coat after which, the face of the wheel is sometimes again machined to expose a bright machined surface to achieve a desired aesthetic affect. The machined portion of the wheel is once again treated with a conversion coating and painted with a powder or liquid clear coat to provide a two-toned appearance where the face of the wheel exhibits a bright machined surface and the remainder of the three-dimensional contours of the wheel exhibits the color coating.

This process is not only exceedingly laborious, the durability of the clear coat coating, particularly on the face of the wheel, has not kept pace with increasing consumer expectations. The cost associated with maintaining and operating application equipment for applying the conversion coating is becoming increasing cost prohibitive while not providing requisite durability. Therefore, it would be desirable to enhance the durability of the coated surfaces of an alloy wheel while simultaneously reducing the number of steps required to provide a durable coating, US2012/0015209 discloses wheels having a decorative coating including an oxide coating and method of making the same.

### SUMMARY

A method of coating an alloy wheel to provide enhanced durability is disclosed. An alloy wheel is formed having a three dimensional configuration defining a face and recessed surfaces. The face of the wheel is machined providing a smooth surface at the face and defining an edge between the smooth surface of the face and the recessed surfaces. A nozzle element for projecting a plasma jet toward the wheel is provided. The plasma jet is projected toward the smooth surface of the face, toward the edge, and toward at least a portion of the recessed surfaces forming an alloy oxide at least the on the face and the edge disposed between the face and the recessed surfaces. A first polymeric coating is applied over the face, the recessed surfaces and the edge disposed between the face and the recessed surfaces.

In addition to projecting a plasma jet toward the wheel surface, a plasma jet is optionally projected onto a first paint coating prior to applying a second paint coating. Subjecting the first paint coating to the plasma treatment has proven to enhance adhesion between coating layers. When used in combination with projecting the plasma jet onto the wheel alloy, multi-layer coating adhesion and durability improvements are achievable.

The inventive method of the present application has provided enhanced durability qualities that weren't previously achievable of the prior art coating process. Prior to the performance testing done on a wheel subjected to the process of the present application, it was believed that treating an alloy surface with a conventional conversion coating provided the best possible durability when the wheel surface is painted with a polymeric coating. The improvements after accelerated testing exceeded all expectations by providing unexpected durability results. After filiform testing in a humidity chamber nearly no corrosion extended from a line scribed into the alloy substrate as per ASTM test procedures. Alternatively, a conventional wheel coating system making use of a conventional conversion coating showed in excess of 3mm of corrosion.

A gravelometer test was performed per ASTM D3170 standards on a wheel coated by the method of the present invention and a wheel coated by the conventional method. Although the coating was marred, the wheel coated using the method of the present invention showed no chipping of the coating layers after being subjected to the gravelometer test and having an ASTM rating of A, or the highest rating. The wheel having the conventional coating showed a significant number of coating chips in the range of 3-6mm.

### BRIEF DESCRIPTION OF THE DRAWINGS

Other advantages of the present invention will be readily appreciated, as the same becomes better understood by reference to the following detailed description when considered in connection with the accompanying drawings, wherein:
Figure 1 shows a cross-sectional view of a wheel and nozzle element of the present invention;
Figure 2 shows a cross-sectional view of a wheel and an alternative embodiment of the nozzle element of the present invention;
Figure 3 shows flow chart of one embodiment of the method of the present invention;
Figure 4 shows a flow chart of a further embodiment of the method of the present invention;
Figure 5 shows a flow chart of a still further embodiment of the method of the present invention; and
Figure 6 shows a flow chart of a still further embodiment of the method of the present invention.

### DETAILED DESCRIPTION

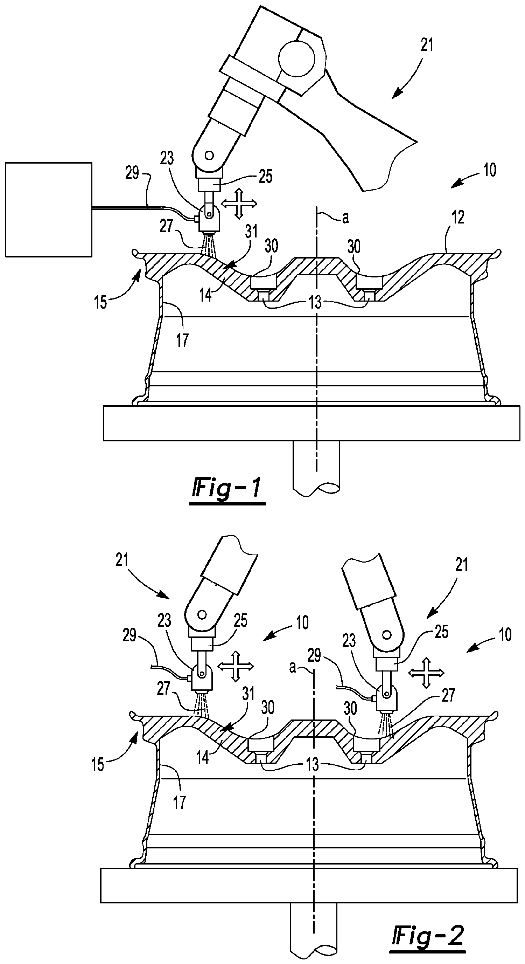

The method of coating an aluminum wheel of the present invention provides a streamlined process over that of the prior art while simultaneously enhancing durability of the wheel. Referring now to Figure 1, a cross-section of an aluminum wheel is generally shown at 10. The wheel 10 is formed via a conventional forming method and includes a machined face 12 of the wheel to form a "bright machined" surface. Additional machine operations to form lug apertures 13 and a valve stem aperture 15 are included, but are not within the scope of this invention. The wheel 10 defines a wheel axis a around which the wheel rotates as is well known to those of skill in the art. The wheel 10 also includes three-dimensional configuration having recessed surfaces 14 that define side of the wheel spokes and visible portions of a wheel rim 17. An edge 19 is disposed between the machined face 12 and the recessed surfaces 14.

A nozzle element 21 includes plasma nozzle 23 that is mounted on an articulating arm 25, such as, for example, a robot arm. The plasma nozzle 23 projects a plasma jet 27 in an atmospheric environment as set forth in United States Patent No. 6,677,550, the contents of which are included herein by reference. The nozzle 23 is provided by PlasmaTreat GmbH. However, the other equivalent nozzles 23 capable of providing an atmospheric plasma jet may also be used. A gas line 29 feeds a reactant gas into the nozzle 23 when desired. It is contemplated by the inventors that siloxane, or other reactant will suffice as will become more evident herein below.

The articulating arm 25 moves the nozzle 23 laterally in a generally parallel direction relative to the wheel axis a and radially inwardly and outwardly relative to the wheel 10. During processing, the wheel 10 rotates around axis a while the nozzle 21 projects the plasma jet 27 toward the wheel 10. While the wheel rotates, the articulating arm moves the nozzle 21 in a radial direction so that the plasma jet 27 contacts the entire face 12 and edge 19 of the wheel. The nozzle 23 continues to project the plasma jet 27 into open spaces 31 between spokes 33 and lug apertures 13 of the wheel 10 so that at least a portion of the recessed surfaces 14 are subject to plasma treatment.

An alternative embodiment is shown in Figure 2 where two nozzle elements 21 are included. Each nozzle element 21 includes a nozzle 23 mounted on an articulating arm 25. The two nozzle elements 21 are believed to reduce the cycle time for plasma treatment in half. Each nozzle 21 moves in a lateral direction parallel to the axis a and in a radial direction related to the wheel. In one example, the wheel moves only 180° while the nozzles project plasma jet 27 at a desired location. It is further contemplated that the wheel can remain in a stationary position while each articulating arm 25 moves each nozzle 23 around the wheel 10, including projecting plasma directly at the recessed surfaces 14. It is further believed that more than two nozzle elements 21 can be selected to further reduce cycle time.

In the alternative embodiment, multiple nozzles extend radially outwardly from the axis a so that the wheel need only turn one rotation of 360° to complete the plasma process. A still further embodiment, a plurality of nozzles 29 are configured as an X or a cross shape extending radially outwardly from the axis a so that the wheel need only turn 90° for full plasma coverage or not at all while the articulating arms 25 move the nozzles 29 around the wheel 10 .

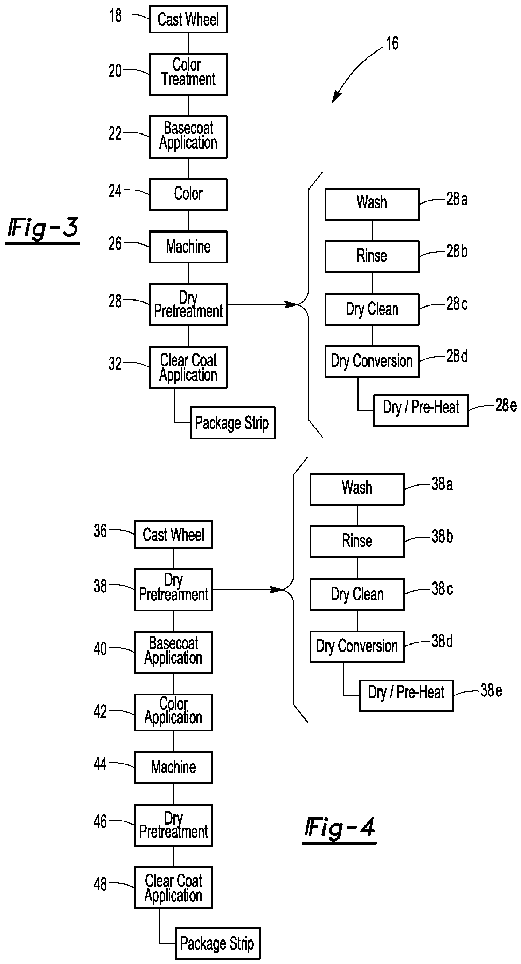

Referring now to Figure 3, a flowchart of a first embodiment is generally shown at 16 where each numbered box represents a different Step of the processing and coating of the wheel 10. The wheel 10 is first formed to a geometrically desirable configuration as identified at Step 18. Subsequent to the forming Step 18, the wheel 10 is subject to conventional cleaning and pretreatment as identified at Step 20 where acidic cleaners, such as, for example, a phosphoric based cleaner, clean the surface of the wheel and a zirconium titanium molecular etch is performed to form a zirconium based conversion coating to prepare the entire surface of the wheel for applying a paint coating. Subsequent to the pretreatment Step 20, a base coat is applied to the entire wheel surface providing a primer surface as identified at Step 22. Subsequent to applying the base coat at Step 22, a color coating is applied to, at least, the three-dimensional surface 14 of the wheel 10 as identified at Step 24. The color coating at Step 24, sometimes referred to as a base coat, includes pigments for color and metallic flakes to add visual depth to the three-dimensional surface 14 to further enhance the esthetics of the wheel 10. Subsequent to the color coating Step 24, the face 12 of the wheel 10 is machined on a lathe to provide a generally planar surface that has a bright machined appearance as identified at Step 26. It should be understood by those of ordinary skill in the art that after each paint application step 20, 24, 32 the paint is cured in a paint bake oven.

After the machining 26 Step is performed on the face 12 of the wheel 10, which is now a bare, smooth machined aluminum, the face 12 subject to a dry pretreatment as identified at Step 28. The dry pretreatment Step 28 includes washing 28A and rinsing 28B the wheel 10 to provide a clean surface to the face 12 by removing alloy grinds, dust and die release agents. Subsequent to rinsing, the face 12 of the wheel is subject to a plasma treatment having an atmospheric plasma jet 27 for providing dry cleaning to the face 12 of the wheel 10. This is best represented in Figure 1 where a plasma nozzle 23 is shown providing a plasma jet 27 onto the bright machined surface comprising the face 12 of the wheel 10.

In this embodiment, the wheel 10 is pivoted on an axis a (Figure 3) while the nozzle 29 moves toward the axis a (Figures 1 and 2) of the wheel 10 from proximate the rim 17 toward the axis a for providing a plasma treatment 28C (Figure 4) to the bright machined face 12 of the wheel 10 and to edges 30 disposed between the three-dimensional surface 14 and the face 12 of the wheel 10. In this embodiment, the plasma jet 27 used in Step 28C includes a spray pattern providing a rapid dry cleaning to the bright machined face 12 of the wheel 10.

At Step 28D of Figure 4, a dry conversion process is performed where a siloxane or equivalent reactant is injected into the plasma jet 31 to which an aluminum siloxane molecular structure or other alloy siloxane structure, is formed onto the bright machined face 12 of the wheel 10. In this embodiment, it is contemplated by the inventors that the plasma jet 31 diameter is about 6mm. However, the plurality embodiments of nozzle 23 configuration for the dry or plasma of Step 28B set forth above may also be used. Furthermore, it is desirable to space the nozzle 23 for both Steps 28C and 28D at an effective distance from the bright machined face 12 of the wheel 10. To the extent the bright machined face 12 of the wheel 10 is not substantially planar, the nozzle 23 moves toward the face 12 of the wheel 10 to maintain the effective distance from the face 12, as set forth above. As further set forth above, the edge 19 is also subject to the plasma jet 27.

Subsequent to the dry conversion Step 28D, a dry preheat Step 28E is performed to prepare the wheel for a clear coat paint application identified at Step 32. The clear coat is either a powder or liquid depending upon the needs and performance requirements of a particular wheel. After the clear coat has cured, the wheel is ready for packaging and shipping as shown in Step 34.

An alternate embodiment is shown in Figure 4. In this embodiment the wheel is formed at Step 36 as set forth above. Subsequent to forming, the entire wheel is subject to a color pretreatment identified at Step 38. During the color pretreatment Step 38, the entire wheel is washed and rinsed as identified in Steps 38A and 38B to clean contaminants from casting off the surface of the wheel 10. The entire wheel 10 is treated to an atmospheric plasma cleaning as identified as Step 38C. In this embodiment, the wheel is placed into a vacuum chamber where a plasma gas performs plasma cleaning on the entire surface of the wheel 10. Subsequent to the plasma cleaning Step 38C, a plasma or dry conversion Step 38D is performed. In this Step 38D, the chamber is again maintained in a vacuum and a siloxane gas, or equivalent reactant, is injected prior to plasma treating the entire wheel. Therefore, the entire wheel includes a siloxane aluminum, or equivalent siloxane alloy, etched surface. Subsequent to the plasma conversion Step 38D, the wheel 10 is subject to a dry preheat Step 38E completing the dry pretreatment Step 38 of the wheel 10. A base coat or primer application follows the dry pretreatment Step 38 as is identified at Step 40. Subsequent to the base coat application Step 40, a color application Step 42 is performed in a similar manner as set forth above.

The face 12 of the wheel 10 is subject to a machining Step 44 that occurs in a similar manner as set forth above to expose a bright machined face 12. After the machining Step 44, a dry pretreatment Step 46 occurs, which is similar to the clear pretreatment Step set forth at Step 28 in the embodiment set forth above. Therefore, the bright machined face 12 of the wheel 10 in this embodiment receives an atmospheric plasma cleaning and plasma conversion by way of plasma jet 27 prior to being subject to a clear coat application Step 48. As set forth above, the clear coat application takes the form of a powder clear coat or a liquid clear coat. As further set forth above, after each paint application step 40, 42, 48 the paint is cured in a paint bake oven. Once the clear coat is cured, the wheel is packaged for shipping to the customer.

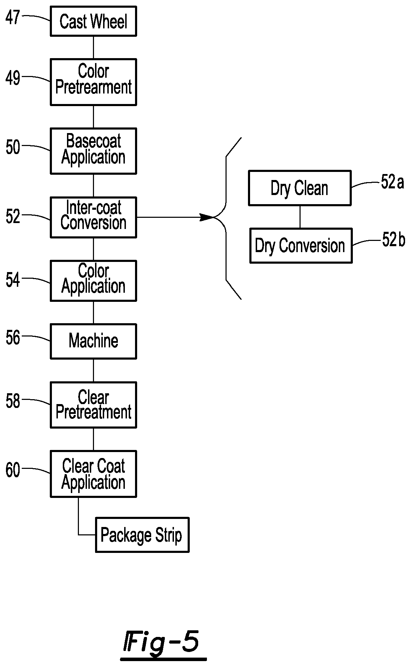

A still further embodiment is shown in Figure 5. In this embodiment, the first Step is a forming Step 47 after which the wheel 10 is subject to a color pretreatment Step 49. The color pretreatment Step 49 is either a conventional color pretreatment where the wheel is subject to a liquid cleaning and a liquid conversion, or a dry clean and dry conversion as desired. Subsequent to the color pretreatment Step 49, the wheel is subject to a base coat application Step 50 includes providing a primer, in particular, to the three-dimensional surfaces 14 of the wheel 10. After the base coat application Step 50, an inter-coat conversion Step 52 is performed subjecting the base coat disposed on the wheel 10 to a dry, plasma cleaning 52A as set forth above, followed by a dry conversion Step 52A of plasma having a siloxane or other reactant disposed in the plasma jet to alter the chemical composition of the base coat applied during the base coat application Step 50.

Subsequent to the inter-coat conversion Step 52, the wheel receives a color coating, in particular on the three-dimensional surfaces 14 via the color application Step 54. The face 12 of the wheel 10 is next subject to a machining Step 56 to provide a bright machined surface that is next subject to a clear pretreatment Step 58 being either a conventional liquid pretreatment or the plasma cleaning and plasma conversion treatment using the plasma jet 27 set forth above. When a clear pretreatment Step 58 is completed a clear coat application Step 60 provides an aesthetically pleasing finish to the entire wheel 10. As set forth above, after each paint Step 50, 54, 60 the paint is cured in a paint bake oven. Once complete, the wheel 10 is packaged for shipment to the customer.

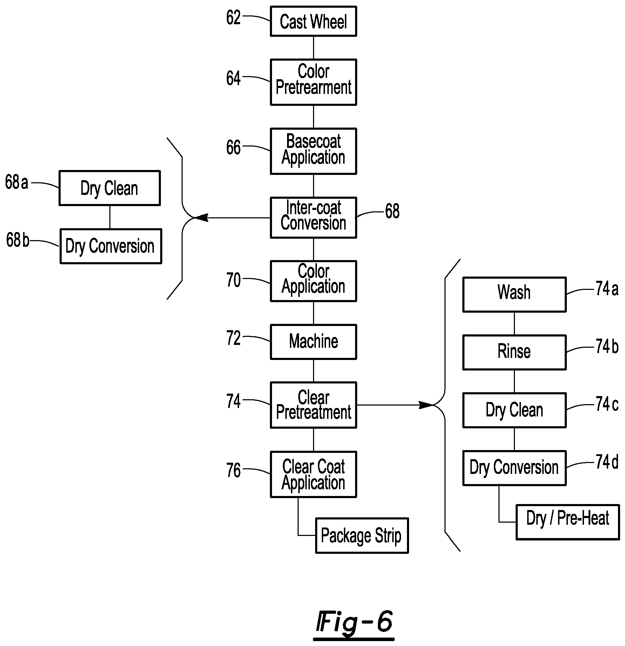

Referring now to Figure 6, the flexibility of the subject invention is shown where alternative and redundant dry treatment steps may be applied to the wheel 10 making use of the plasma clean and plasma conversion steps of the present invention. In this manner, the wheel is formed Step 62, and is subsequently subject to the color pretreatment Step 64 which makes use of a liquid cleaning and a liquid conversion coating. Next, the base coat application Step 66, a primer is applied to the wheel 10.

Following the base coat application Step 66, the wheel is subject to an inter-coat conversion Step 68 that is performed in the same manner as set forth at the embodiment above making use of plasma cleaning 68A and plasma conversion Step 68B of the primer applied at the base coat application Step 66. Subsequent to the inter-coat conversion Step 68, the wheel 10 is subject to a color application Step 70, whereby a color coating is applied, at least to the three-dimensional surfaces 14 of the wheel 10.

Following the color application Step 70, the face 12 of the wheel 10 is machined on a lathe during the machining Step 72 to provide a bright machined surface on the face 12 of the wheel 10. Following the machining Step 72, the clear pretreatment Step 74 occurs where the wheel 10 is first washed at the washing Step 74A and rinsed at the rinsing Step 74B. Following the rinsing Step 74B, the dry clean Step 74C and the dry conversion Step 74D making use of ambient plasma jet 27 including siloxane, or equivalent reactant, respectively, as set forth above, occurs. Subsequent to the dry conversion Step 74D, the wheel is dried and preheated after which the clear coat application Step 76 occurs to apply clear coat to the entire wheel. As set forth above, after each paint Step 66, 70, 76, the paint is cured in a paint bake oven. After the clear coat Step 76 has been completed, the wheel 10 is packaged and shipped to the customer.

It should be understood by those of ordinary skill in the art, that each plasma Step not only provides a dry cleaning, to at least the bright machined surface 12 of the wheel 10, and a dry conversion using a siloxane or similar reactive compound is also subjects the transition edge 19 to the same pretreatment. In each embodiment, the durability performance of the wheel when subject to chip testing and corrosion testing showed unexpected and enhanced results. Various application methods of the dry cleaning and dry conversion Steps contemplated by the inventors include a 2D turning profile where the wheel 10 is pivoted on its axis a along a three-dimensional CNC surface profile whereby the plasma jet 27 follows the profile of the wheel by way of articulating arm 25, and plasma treatment of the entire wheel in a low vacuum environment at both ambient and siloxane enhanced Steps.

The invention has been described in an illustrative manner, and it is to be understood that the terminology that has been used is intended to be in the nature of words of description rather than of limitation. Obviously, many modifications and variations of the present invention are possible in light of the above teachings. It is therefore to be understood that within the specification, the reference numerals are merely for convenience, and are not to be in any way limiting, the invention may be practiced otherwise than is specifically described.

## Claims

1. A method of coating an alloy wheel, comprising the steps of:
forming an alloy wheel having a three dimensional configuration defining a face and recessed surfaces;
machining said face of said wheel thereby providing a smooth surface at said face and defining an edge between said smooth surface of said face and said recessed surfaces;
providing a nozzle element for projecting a plasma jet toward said wheel;
projecting the plasma jet toward said smooth surface of said face, said edge, and toward at least a portion of said recessed surfaces thereby forming an alloy oxide at least on said face and said edge disposed between said face and said recessed surfaces;
applying a first polymeric coating over said face, said recessed surfaces and said edge disposed between said face and said recessed surfaces.

2. The method set forth in claim 1, wherein said step of projecting the plasma jet toward said wheel is further defined by rotating said wheel relative to said jet element around a wheel axis while articulating said nozzle element radially inwardly and radially outwardly of said wheel.

3. The method set forth in claim 1, further including the step of changing a surface energy of said face, said recessed surfaces and said edge disposed between said face and said recessed surfaces from a first surface energy to a second surface energy wherein said second surface energy is greater than said first surface energy.

4. The method set forth in claim 1, wherein said step of projecting the plasma jet is further defined by infusing said plasma jet with a reactant thereby increasing the reactivity of said face, said recessed surfaces and said edge disposed between said face and said recessed surfaces.

5. The method set forth in claim 4, wherein said step of infusing said plasma jet with a reactant is further defined by infusing said plasma jet with siloxane.

6. The method set forth in claim 1, wherein said step of providing a nozzle element is further defined by providing a plurality of nozzles each cooperably projecting a plasma jet toward said wheel.

7. The method set forth in claim 1, wherein said step of providing a nozzle element is further defined by mounting a nozzle on an articulating arm for maintaining said nozzle at a constant distance from said face, said recessed surfaces and said edge disposed between said face and said recessed surfaces.

8. The method set forth in claim 1, further including the step of projecting a plasma jet over said first polymeric coating and applying a second layer of polymeric coating thereupon.

9. The method set forth in claim 1, wherein said step of machining said face of said wheel thereby providing a smooth surface at said face of said wheel is performed after said step of applying a first polymeric coating.

10. The method set forth in claim 1, further comprising the steps of:
applying a second polymeric coating to said first polymeric coating; and
projecting the plasma jet toward said wheel onto said first polymeric coating prior to applying said second polymeric coating.

11. The method set forth in claim 10, wherein said step of applying a first polymeric coating is further defined as applying a primer coating and said step of applying a second polymeric coating is further defined as applying a color coating.

12. The method set forth in claim 10, wherein said step of applying a first polymeric coating is further defined as applying a color coating and said step of applying a second polymeric coating is further defined as applying a clear coating.

13. The method set forth in claim 10, wherein said step of projecting the plasma jet toward said wheel onto said first polymeric coating prior to applying said second polymeric coating is further defined by increasing a surface energy of said first polymeric coating.

14. The method set forth in claim 10, further including the step of exposing said face of said wheel by removing said first and said second polymeric coating and then projecting the plasma jet toward said exposed face.

15. The method set forth in claim 14, further including the step of applying a clear coating over said exposed face of said wheel after said exposed face has been subjected to the plasma jet.

## Patentansprüche

1. Ein Verfahren zum Beschichten eines Leichtmetallrades, aufweisend folgende Schritte:
Formen eines Leichtmetallrades mit einer dreidimensionalen Konfiguration definierend eine Seite und vertiefte Oberflächen;
Bearbeiten der Seite des Rades, dabei Herstellen einer glatten Oberfläche an der Seite und Definieren einer Kante zwischen der glatten Oberfläche der Seite und den vertieften Oberflächen;
Bereitstellen eines Düsenelementes zum Leiten eines Plasmastrahls in Richtung des Rades;
Leiten des Plasmastrahles in Richtung der glatten Oberfläche der Seite, der Kante und in Richtung von mindestens einem Teil der vertieften Oberflächen, dabei Formen eines Legierungsoxids mindestens auf der Seite und der Kante angeordnet zwischen der Seite und der vertieften Oberflächen;
Auftragen einer ersten Polymerbeschichtung über die Seite, die vertieften Oberflächen und der Kante angeordnet zwischen der Seite und den vertieften Oberflächen.

2. Das Verfahren bestimmt in Anspruch 1, wobei der Schritt des Leitens des Plasmastrahls in Richtung des Rades weiter definiert wird durch Drehen des Rades relativ zu dem Strahlelement um eine Radachse, während das Düsenelement radial nach innen und radial nach außen von dem Rad bewegt wird.

3. Das Verfahren bestimmt in Anspruch 1, weiter beinhaltend den Schritt Verändern einer Oberflächenenergie der Seite, der vertieften Oberflächen und der Kante angeordnet zwischen der Seite und den vertieften Oberflächen von einer ersten Oberflächenenergie hin zu einer zweiten Oberflächenenergie, wobei die zweite Oberflächenenergie größer ist als die erste Oberflächenenergie.

4. Das Verfahren bestimmt in Anspruch 1, wobei der Schritt des Leitens des Plasmastrahls weiter definiert ist durch Einleiten des Plasmastrahls mit einem Reaktionsmittel, dadurch Erhöhen der Reaktionsfreudigkeit der Seite, der vertieften Oberflächen und der Kante angeordnet zwischen der Seite und den vertieften Oberflächen.

5. Das Verfahren bestimmt in Anspruch 4, wobei der Schritt des Einleitens des Plasmastrahles mit einem Reaktionsmittel weiter definiert ist durch Einleiten des Plasmastrahls mit Siloxan.

6. Das Verfahren bestimmt in Anspruch 1, wobei der Schritt des Bereitstellens eines Düsenelementes weiter definiert ist durch Bereitstellen einer Mehrzahl von Düsen, von denen jede in kooperierender Weise einen Plasmastrahl in Richtung des Rades leitet.

7. Das Verfahren bestimmt in Anspruch 1, wobei der Schritt des Bereit-stellens eines Düsenelementes weiter definiert ist durch Befestigen einer Düse auf einen beweglichen Arm zum Halten der Düse in einem festen Abstand von der Seite, den vertieften Oberflächen und der Kante angeordnet zwischen der Seite und den vertieften Oberflächen.

8. Das Verfahren bestimmt in Anspruch 1, weiter beinhaltend den Schritt Leiten eines Plasmastrahls über die erste Polymerbeschichtung und Auftragen einer zweiten Schicht von Polymerbeschichtung darauf.

9. Das Verfahren bestimmt in Anspruch 1, wobei der Schritt des Bearbeitens der Seite des Rades, dabei Herstellen einer glatten Oberfläche an der Seite des Rades, durchgeführt wird nach dem Schritt des Auftragens einer ersten Polymer-beschichtung.

10. Das Verfahren bestimmt in Anspruch 1, weiter aufweisend folgende Schritte:
Auftragen einer zweiten Polymerbeschichtung auf die erste Polymerbeschichtung; und
Leiten des Plasmastrahles in Richtung des Rades auf die erste Polymerbeschichtung vor Auftragen der zweiten Polymerbeschichtung.

11. Das Verfahren bestimmt in Anspruch 10, wobei der Schritt des Auftragens einer ersten Polymerbeschichtung weiter definiert ist als Auftragen einer Grundierungsbeschichtung und der Schritt des Auftragens einer zweiten Polymerbeschichtung weiter definiert ist als Auftragen einer Farbbeschichtung.

12. Das Verfahren bestimmt in Anspruch 10, wobei der Schritt des Auftragens einer ersten Polymerbeschichtung weiter definiert ist als Auftragen einer Farbbeschichtung und der Schritt des Auftragens einer zweiten Polymerbeschichtung weiter definiert ist als Auftragen einer klaren Beschichtung.

13. Das Verfahren bestimmt in Anspruch 10, wobei der Schritt des Leitens des Plasmastrahls in Richtung des Rades auf die erste Polymerbeschichtung vor Auftragen der zweiten Polymerbeschichtung weiter definiert ist durch Erhöhen einer Oberflächenenergie der ersten Polymerbeschichtung.

14. Das Verfahren bestimmt in Anspruch 10, weiter beinhaltend den Schritt Freilegen der Seite des Rades durch Entfernen der ersten und zweiten Polymerbeschichtung und dann Leiten des Plasmastrahles in Richtung der freigelegten Seite.

15. Das Verfahren bestimmt in Anspruch 14, weiter beinhaltend den Schritt Auftragen einer klaren Beschichtung auf die freigelegte Seite des Rades, nachdem die freigelegte Seite dem Plasmastrahl ausgesetzt worden ist.

## Revendications

1. Procédé de revêtement d'une roue en alliage, comprenant les étapes de :
formation d'une roue en alliage ayant une configuration tridimensionnelle définissant une face et des surfaces en creux ;
usinage de ladite face de ladite roue, donnant ainsi une surface lisse au niveau de ladite face et définissant une arête entre ladite surface lisse de ladite face et lesdites surfaces en creux ;
obtention d'un élément de buse pour projeter un jet de plasma vers ladite roue ;
projection du jet de plasma vers ladite surface lisse de ladite face, ladite arête, et vers au moins une partie desdites surfaces en creux, formant ainsi un oxyde de l'alliage au moins sur ladite face et ladite arête disposée entre ladite face et lesdites surfaces en creux ;
application d'un premier revêtement polymère sur ladite face, lesdites surfaces en creux et ladite arête disposée entre ladite face et lesdites surfaces en creux.

2. Procédé selon la revendication 1, dans lequel ladite étape de projection du jet de plasma vers ladite roue est en outre définie par la rotation de ladite roue par rapport audit élément de buse autour d'un axe de roue tout en articulant ledit élément de buse radialement vers l'intérieur et radialement vers l'extérieur de ladite roue.

3. Procédé selon la revendication 1, incluant en outre l'étape de modification d'une énergie de surface de ladite face, desdites surfaces en creux et de ladite arête disposée entre ladite face et lesdites surfaces en creux, d'une première énergie de surface à une seconde énergie de surface, ladite seconde énergie de surface étant supérieure à ladite première énergie de surface.

4. Procédé selon la revendication 1, dans lequel ladite étape de projection du jet de plasma est en outre définie par l'apport d'un réactif audit jet de plasma, augmentant ainsi la réactivité de ladite face, desdites surfaces en creux et de ladite arête disposée entre ladite face et lesdites surfaces en creux.

5. Procédé selon la revendication 4, dans lequel ladite étape d'apport d'un réactif audit jet de plasma est en outre définie par l'apport d'un siloxane audit jet de plasma.

6. Procédé selon la revendication 1, dans lequel ladite étape d'obtention d'un élément de buse est en outre définie par l'obtention d'une pluralité de buses projetant chacune de manière coopérante un jet de plasma vers ladite roue.

7. Procédé selon la revendication 1, dans lequel ladite étape d'obtention d'un élément de buse est en outre définie par le montage d'une buse sur un bras articulé pour maintenir ladite buse à une distance constante de ladite face, desdites surfaces en creux et de ladite arête disposée entre ladite face et lesdites surfaces en creux.

8. Procédé selon la revendication 1, incluant en outre l'étape de projection d'un jet de plasma sur ledit premier revêtement polymère et d'application d'une seconde couche de revêtement polymère sur celui-ci.

9. Procédé selon la revendication 1, dans lequel ladite étape d'usinage de ladite face de ladite roue donnant ainsi une surface lisse au niveau de ladite face de ladite roue est effectuée après ladite étape d'application d'un premier revêtement polymère.

10. Procédé selon la revendication 1, comprenant en outre les étapes de :
application d'un second revêtement polymère sur ledit premier revêtement polymère ; et
projection du jet de plasma vers ladite roue sur ledit premier revêtement polymère avant l'application dudit second revêtement polymère.

11. Procédé selon la revendication 10, dans lequel ladite étape d'application d'un premier revêtement polymère est en outre définie comme l'application d'un revêtement d'apprêt et ladite étape d'application d'un second revêtement polymère est en outre définie comme l'application d'un revêtement d'une couleur.

12. Procédé selon la revendication 10, dans lequel ladite étape d'application d'un premier revêtement polymère est en outre définie comme l'application d'un revêtement d'une couleur et ladite étape d'application d'un second revêtement polymère est en outre définie comme l'application d'un revêtement transparent.

13. Procédé selon la revendication 10, dans lequel ladite étape de projection du jet de plasma vers ladite roue sur ledit premier revêtement polymère avant l'application dudit second revêtement polymère est en outre définie par l'augmentation d'une énergie de surface dudit premier revêtement polymère.

14. Procédé selon la revendication 10, incluant en outre l'étape de mise à nu de ladite face de ladite roue par élimination dudit premier et dudit second revêtement polymère et ensuite projection du jet de plasma vers ladite face mise à nu.

15. Procédé selon la revendication 14, incluant en outre l'étape d'application d'un revêtement transparent sur ladite face mise à nu de ladite roue après que ladite face exposée a été soumise au jet de plasma.
